# EUROPÄISCHE PATENTSCHRIFT

(11) **EP 1 789 324 B1**
(45) Veröffentlichungstag und Bekanntmachung des Hinweises auf die Patenterteilung: **19.12.2007**
(21) Anmeldenummer: 05787337.4
(22) Anmeldetag: 13.09.2005
(51) Int. Cl.: B65B 3/02, B65B 43/50, B65B 51/22

(54) **VORRICHTUNG UND VERFAHREN ZUM VERSCHLIESSEN GEFÜLLTER KARTON/KUNSTSTOFF-VERBUNDPACKUNGEN MITTELS ULTRASCHALL**
DEVICE AND METHOD FOR SEALING FILLED CARDBOARD/PLASTIC COMPOSITE PACKAGING BY MEANS OF ULTRASOUND
DISPOSITIF ET PROCEDE DE FERMETURE D'EMBALLAGES COMPOSITES CARTON/PLASTIQUE PAR ULTRASONS

(30) Priorität: 17.09.2004 DE 102004045688
(43) Veröffentlichungstag der Anmeldung: 30.05.2007
(73) Patentinhaber: SIG Technology AG, 8212 Neuhausen am Rheinfall (CH)
(72) Erfinder: BALTES, Klaus, 50127 Bergheim (DE); BERGER, Jörg, 52428 Jülich (DE); SEICHE, Werner, 50127 Bergheim (DE); GÖRICK, Felix, 41516 Grevenbroich (DE)
(74) Vertreter: Cohausz & Florack
(86) Internationale Anmeldenummer: PCT/EP2005/009803
(87) Internationale Veröffentlichungsnummer: WO 2006/029795

(56) Entgegenhaltungen:
- EP-A- 0 112 605
- US-A- 3 579 958
- US-A- 4 581 873
- US-A- 5 069 021

## Beschreibung

Die Erfindung betrifft eine Vorrichtung zum Verschließen gefüllter Karton/Kunststoff-Verbundpackungen mittels Ultraschall, mit wenigstens einem Faltwerkzeug und wenigstens einem Schweißwerkzeug sowie einer Transporteinrichtung zum Transportieren der Packungen sowie ein dafür geeignetes Verfahren, wobei die zu verschließende Naht zunächst gefaltet wird und die Kontaktflächen anschließend mittels Schweißwerkzeugen verschweißt werden.

Vorrichtungen zum Befüllen und Verschließen von Karton/Kunststoff-Verbundpackungen sind seit langem in unterschiedlichsten Ausführungen bekannt. Hierbei werden meist Längsläufer eingesetzt, wobei die zu befüllenden Packungen in - gegebenenfalls mehreren - parallelen Linien hintereinander angeordnet sind und sterilisiert, befüllt und schließlich verschlossen werden. Der Transport der Packungen erfolgt dabei intermittierend, bedingt durch die Verwendung eines Dornrades zum Herstellen des offenen Packungskörpers.

Der intermittierende Transport von Packungen ist nachteilig, da nach dem Füllvorgang ein Schwappen des Produktes nicht verhindert werden kann, so dass das Produkt die Außenfläche der Siegelnaht benetzen kann, was zur Folge hat, dass das Schweißwerkzeug verschmutzt und während des Produktionsprozesses gereinigt werden muss.

Die bekannten Längsläufer lassen nur mit äußerst hohem konstruktiven Aufwand separat bewegliche Faltwerkzeuge zu, die gegebenenfalls mit der intermittierend transportierten Packung mitlaufen und entsprechend zurückgeführt werden müssen. Weisen die Längsläufer-Füllmaschinen mehrere parallele Linien auf, so ist der seitliche Platz neben den hintereinander angeordneten Packungen begrenzt, was wiederum zu Problemen der Anordnung von Falt- und Schweißwerkzeugen führt. Es sind auch kombinierte Falt- und Schweißwerkzeuge bekannt, die jedoch aufgrund des entsprechend hohen konstruktiven Aufwandes einerseits relativ groß bauen und andererseits teuer in der Herstellung sind.

Mithin bestimmt die Schweißdauer bei stationär angeordneten Schweißwerkzeugen die Taktzeit der intermittierend arbeitenden Füllmaschinen, da eine zuverlässig geschlossene Packung Grundvoraussetzung für deren Verkaufsfähigkeit ist.

Der Erfindung liegt daher die Aufgabe zugrunde, die eingangs genannten und zuvor näher beschriebenen Vorrichtung (siehe z.B. Dokument US-A-4 581 873) zum Verschließen von gefüllten Karton/Kunststoff-Verbundpackungen bzw. das entsprechende Verfahren so auszugestalten und weiterzubilden, dass eine zuverlässige Schweißnaht erzeugt wird, ohne dass die Schweißdauer die Transportgeschwindigkeit bestimmt und damit den Produktionsprozess beeinflusst. Weiterhin ist erwünscht, dass ein Verschmutzen von Faltwerkzeugen bzw. Schweißwerkzeugen durch Austreten des Produktes während des Produktionsprozesses zuverlässig ausgeschlossen ist.

Vorrichtungstechnisch wird die Aufgabe gelöst durch ein eine Vielzahl von hintereinander angeordneten Packungen aufnehmendes Transportrad, durch eine der Anzahl der Aufnahmeplätze entsprechende Anzahl von mit dem Transportrad umlaufenden Faltwerkzeugen und durch wenigstens ein drehbar angeordnetes Schweißwerkzeug, welches relativ zum Transportrad koaxial zu diesem verfahrbar ist. Durch die erfindungsgemäße Ausgestaltung können jedes separate Faltwerkzeug und auch das bzw. die zu verwendende Schweißwerkzeuge für den Faltvorgang optimal ausgebildet werden. Darüber hinaus ermöglicht die Rundläuferkonstruktion eine längere Schweißzeit und damit eine sicherere Schweißnaht.

Verfahrensmäßig wird die Aufgabe dadurch gelöst, dass die hintereinander angeordneten, gefüllten Packungen einem umlaufenden Transportrad zugeführt werden, dort mittels mit umlaufenden Faltwerkzeugen derart gefaltet werden, dass sich eine Stegnaht bildet und dass die Stegnähte mittels wenigstens einem mitgeführten Schweißwerkzeug ultraschallverschweißt werden. Der Transport der gefüllten Packungen auf dem mit einer vorgegebenen Geschwindigkeit gleichmäßig drehenden Transportrad vermeidet ein Schwappen des Produktes, weshalb die Außenseiten der Stegnaht und damit auch die Falt- bzw. Schweißwerkzeuge nicht verschmutzt werden können. Da die Faltwerkzeuge erst kurz bevor die Packungen das Schweißrad verlassen öffnen, wird jede geschweißte Stegnaht auch nach dem eigentlichen Schweißvorgang durch die Faltwerkzeuge noch solange mit Druck beaufschlagt, bis die Schweißnaht abgekühlt ist. Dies sorgt für eine zuverlässig dichte Schweißnaht.

Gemäß einer weiteren Lehre der Erfindung sind die Aufnahmeplätze für die Packungen konzentrisch auf dem Transportrad angeordnet. Auf diese Weise können alle Faltwerkzeuge identisch ausgeführt sein und einfach über eine gemeinsame Ansteuerung betätigt werden. Dabei sind die Faltwerkzeuge bevorzugt stationär auf dem Transportrad angeordnet. Es ist jedoch auch möglich, dass die Faltwerkzeuge beweglich auf dem Transportrad angeordnet sind. Als weitere Alternative ist denkbar, dass die Faltwerkzeuge auf Transportbehältern angeordnet sind, welche zur Aufnahme der zu verschließenden gefüllten Packungen vorgesehen sind.

Nach einer weiteren bevorzugten Ausgestaltung der Erfindung wird jedes Schweißwerkzeug solange mitgeführt, bis eine ordnungsgemäße Schweißnaht der jeweils bearbeiteten Packung hergestellt ist. Anschließend schwenkt das Schweißwerkzeug zu einer weiteren Packung, mit der es bis zum Fertigstellen der dortigen Schweißnaht mitfährt etc. Es versteht sich, dass auf diese Weise eine optimale Ausnutzung der Schweißwerkzeuge möglich ist, so dass die Länge der Schweißdauer nicht mehr bestimmend für den Gesamtausstoß der so hergestellten Packungen ist. So ist es beispielsweise denkbar, Transporträder mit mehr als 20 Aufnahmeplätzen vorzusehen, wobei mehrere gleichmäßig über den Umfang verteilt und schwenkbar angeordnete Schweißwerkzeuge während des Umlaufes für jeweils das Verschließen mehrerer benachbarter Packungen eingesetzt werden können.

Eine weitere Lehre der Erfindung sieht vor, dass Mittel zum Anheben der gefüllten Packungen während des Transports auf dem Transportrad vorhanden sind, so dass die Stegnahtlappen vor und während des Schweißvorganges stets in der gleichen Höhe bleiben. Auf diese Weise ist gewährleistet, dass die auf dem Transpörtrad angeordneten Faltwerkzeuge nur in einer (horizontalen) Ebene zwischen ihrer geöffneten und ihrer Schließstellung verfahren.

Gemäß einer anderen Ausgestaltung der Erfindung können weitere Faltwerkzeuge zum Umlegen der verschlossenen Stegnaht sowie der Packungsohren vorgesehen sein, wobei diese weiteren Faltwerkzeuge auch mit den umlaufenden Faltwerkzeugen kombiniert ausgeführt sein können.

Die Erfindung wird nachfolgend anhand einer lediglich ein bevorzugtes Ausführungsbeispiel darstellenden Zeichnung näher erläutert. In der Zeichnung zeigen
- Fig. 1: eine erfindungsgemäße Vorrichtung, schematisch in Draufsicht und
- Fig. 2: den eigentlichen Schließvorgang in schematischer Darstellung.

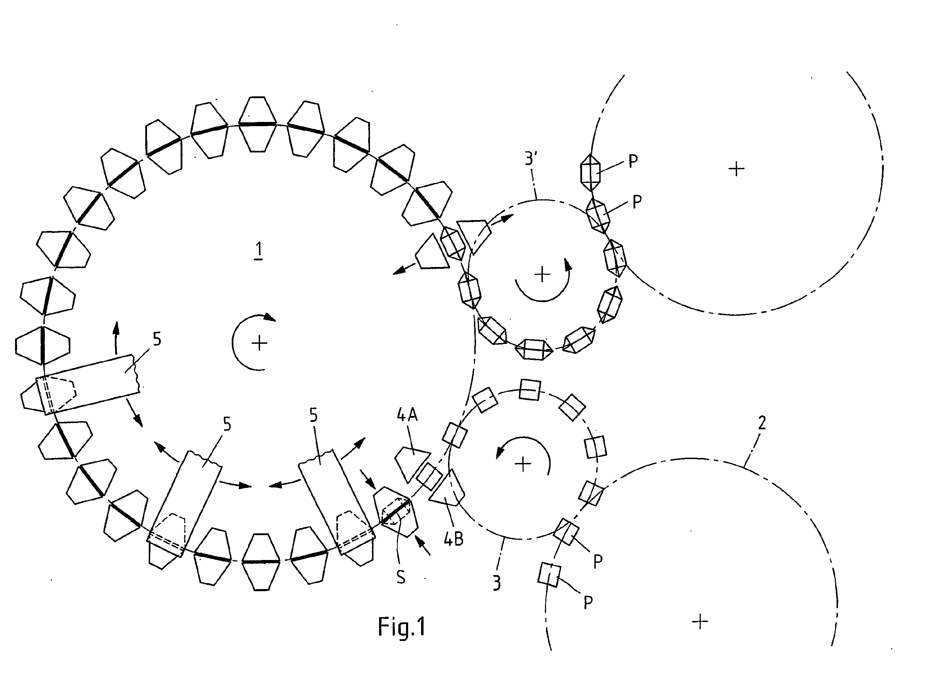

Fig. 1 zeigt eine erfindungsgemäße Vorrichtung zum Verschließen gefüllter Packungen/Kunststoff-Verbundpackungen P mittels Ultraschall, bei der die Transporteinrichtung zum Transportieren der Packungen P als Transportrad 1 ausgebildet ist. Die Packungen P werden dabei kontinuierlich transportiert und, von einem nur schematisch angedeuteten Füllrad 2 kommend, über ein Übergaberad 3 dem Transportrad 1 zugeführt. Auf dem Transportrad 1 ist an jedem Aufnahmeplatz der Packungen P, im dargestellten Ausführungsbeispiel sind 28 Aufnahmeplätze vorhanden, ein aus zwei beweglich aufeinander zu bewegbaren Teilen 4A und 4B bestehendes Faltwerkzeug 4 angeordnet. Diese Faltwerkzeuge erzeugen beim Schließen der offenen Packung P eine Stegnaht S.

Man erkennt schnell, dass aufgrund der relativ hohen Zahl von Aufnahmeplätzen eine relativ lange Verweildauer der gefüllten, jedoch noch nicht verschlossenen Packungen P auf dem Transportrad 1 besteht. Diese wird dazu ausgenutzt, dass die einzelnen Packungen mittels Schweißwerkzeugen 5 zuverlässig verschlossen werden können. Dabei sind im dargestellten und bevorzugten Ausführungsbeispiel mehrere Schweißwerkzeuge 5 vorhanden, welche relativ zum Transportrad 1 und koaxial zu diesem verfahrbar sind. Aus Gründen der Übersicht wurde auf die Darstellung der Faltwerkzeuge 4 auf dem Transportrad 1 im Bereich der Übergabestellen der Packungen P verzichtet.

Ein wesentlicher Vorteil der erfindungsgemäßen Konstruktion ist darin zu sehen, dass neben der ausreichend vorhandenen Zeit für den eigentlichen Schließvorgang auch nach dem Entfernen des Schweißwerkzeuges 5 das Faltwerkzeug 4 noch solange auf beiden Seiten der Stegnähte S der Packungen P einwirkt, bis eine komplette Abkühlung der Ultraschall-Schweißnaht erreicht ist.

Nach Durchlauf des Transportrades 1 erfolgt eine Übergabe der verschlossenen Packungen P an ein weiteres Übergaberad 3', mit dem die Packungen P einem nachgeschalteten und nicht näher bezeichneten weiteren Bearbeitungsrad zugeführt werden können, wo beispielsweise das Umlegen und Ansiegeln der Packungsohren erfolgt.

Nicht dargestellt ist, dass die Faltwerkzeuge auch so ausgeführt sein können, dass nach der Herstellung der Siegelnaht noch auf dem Transportrad die Packungsohren umgelegt und angesiegelt werden können.

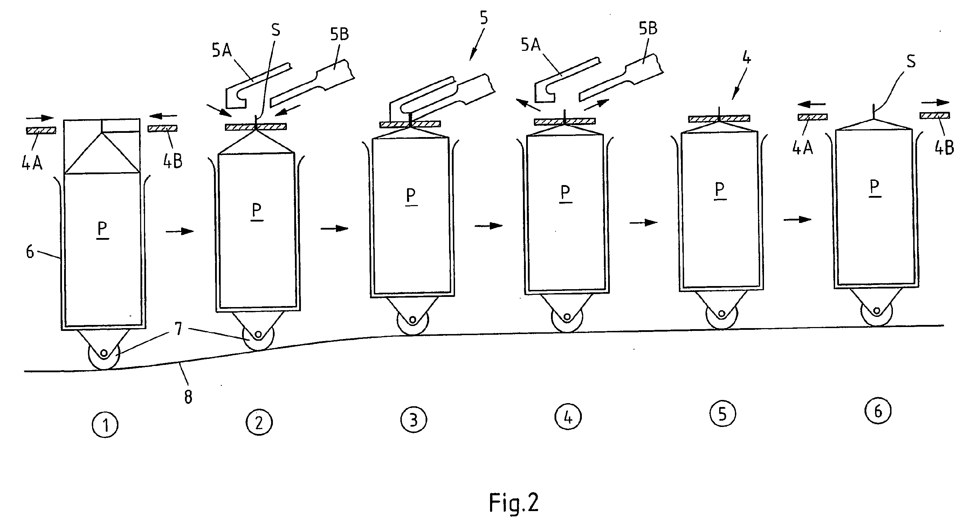

Eine besonders günstige Konstruktion der Faltwerkzeuge 4 ist dann gegeben, wenn diese sich zum Öffnen und Schließen lediglich in einer - nämlich der horizontalen - Ebene bewegen können. Dazu ist es jedoch notwendig, dass die Packungen P beim Zufahren der Faltwerkzeuge 4A und 4B angehoben werden, damit sich die Stegnaht S immer in der gleichen Höhe befindet. Dies ist schematisch in sechs Positionen ① bis ⑥ in Fig. 2 dargestellt.

Es ist klar, dass die Faltbewegung der dem Transportrad 1 zugeführten Packungen P relativ schnell vonstatten geht, um die Packungen P möglichst lange verschlossen halten zu können. Fig. 2 zeigt daher den Schließvorgang stark schematisiert, wobei zur besseren Darstellung die Anordnung der Packungen P, der Faltwerkzeuge 4A und 4B und der aus Amboss 5A und Sonotrode 5B bestehenden Schweißwerkzeuge 5 um 90° gedreht dargestellt ist. Die gefüllten Packungen P, welche bevorzugt aus dem auf dem Kopf stehend transportiert werden und in ihrem Kopfbereich mit (nicht dargestellten) Ausgießelementen versehen sein können, befinden sich in auf das Format der Packungen P abgestimmten Transportbehältern 6, welche auf dem Transportrad 1 angeordnet sind.

Im dargestellten Ausführungsbeispiel ist erkennbar, dass die Transportbehälter 6 Stützräder 7 aufweisen, welche auf einer Kurvenschiene 8 abrollen. Auf diese Weise lässt sich die zu verschließende Packung P beim Zufahren der Faltwerkzeuge 4A und 4B anheben, da sich beim Einfalten der Stegnaht S die Packungshöhe verringert. Es ist klar, dass das Führen bzw. Anheben der Packungen P auch durch beliebig andere Konstruktionselemente als den genannten Stützräder 7 aufweisenden Transportbehältern 6 geschehen kann. In der Position ② der Fig. 2, in der aus Gründen der besseren Übersicht die Faltwerkzeuge nicht mehr mit Bezugszeichen versehen sind, nähern sich der Amboss 5A und die Sonotrode 5B des Ultraschall-Schweißwerkzeugs 5 der Stegnaht S, wobei beim eigentlichen Schweißvorgang die Faltwerkzeuge in der zugefahrenen Stellung verbleiben. Dadurch, dass die Packungen P beim Faltvorgang angehoben werden, ist eine relativ dünne Ausgestaltung der Faltwerkzeuge 4A und 4B möglich, auch wenn diese in der schematischen Darstellung gemäß Fig. 2 eine relativ große Stärke aufweisen.

Nach dem Schweißvorgang (Position ③) entfernen sich die Schweißwerkzeuge 5A und 5B wieder von der Packung P (Position ④) und das Faltwerkzeug 4 bleibt zunächst noch weiter geschlossen (Position ⑤). Schließlich entfernen sich auch die Faltwerkzeuge 4A und 4B wieder von der fertigen Stegnaht S und die Packung P ist fertig verschlossen, wie in Position ⑥ dargestellt.

Es ist nicht dargestellt, dass auch der letzte Behandlungsschritt, nämlich das Umlegen und Ansiegeln der noch abstehenden Packungsohren noch auf der erfindungsgemäßen Vorrichtung durchführbar ist.

## Patentansprüche

1. Vorrichtung zum Verschließen gefüllter Karton/Kunststoff-Verbundpackungen mittels Ultraschall, mit wenigstens einem Faltwerkzeug und wenigstens einem Schweißwerkzeug sowie einer Transporteinrichtung zum Transportieren der Packungen,
**gekennzeichnet durch**
ein eine Vielzahl von hintereinander angeordneten Packungen (P) aufnehmendes Transportrad (1), **durch** eine der Anzahl der Aufnahmeplätze entsprechende Anzahl von mit dem Transportrad (1) umlaufenden Faltwerkzeugen (4) und **durch** wenigstens ein drehbar angeordnetes Schweißwerkzeug (5), welches relativ zum Transportrad (1) koaxial zu diesem verfahrbar ist.

2. Vorrichtung nach Anspruch 1,
**dadurch gekennzeichnet, dass** die Aufnahmeplätze für die Packungen (P) auf dem Transportrad (1) konzentrisch angeordnet sind.

3. Vorrichtung nach Anspruch 1 oder 2,
**dadurch gekennzeichnet, dass** die Faltwerkzeuge (4) stationär auf dem Transportrad (1) angeordnet sind.

4. Vorrichtung nach Anspruch 1 oder 2,
**dadurch gekennzeichnet, dass** die Faltwerkzeuge beweglich auf dem Transportrad angeordnet sind.

5. Vorrichtung nach Anspruch 1 oder 2,
**dadurch gekennzeichnet, dass** die Faltwerkzeuge auf Transportbehältern zur Aufnahme der Packungen angeordnet sind.

6. Vorrichtung nach Anspruch 1 bis 5,
**dadurch gekennzeichnet, dass** mehrere gleichmäßig über den Umfang verteilt und schwenkbar angeordnete Schweißwerkzeuge (5) vorgesehen sind.

7. Vorrichtung nach einem der Ansprüche 1 bis 6,
**dadurch gekennzeichnet, dass** Mittel (7, 8) zum Anheben der gefüllten Packungen (P) während des Transports auf dem Transportrad (1) vorhanden sind, so dass die Stegnahtlappen vor und während des Schweißvorganges stets in der gleichen Höhe angeordnet sind.

8. Vorrichtung nach einem der Ansprüche 1 bis 7,
**dadurch gekennzeichnet, dass** weitere Faltwerkzeuge zum Umlegen der verschlossenen Stegnaht sowie der Packungsohren vorgesehen sind.

9. Vorrichtung nach Anspruch 8,
**dadurch gekennzeichnet, dass** die weiteren Faltwerkzeuge mit den umlaufenden Faltwerkzeugen kombiniert ausgebildet sind.

10. Verfahren zum Verschließen gefüllter Karton/Kunststoff-Verbundpackungen mittels Ultraschall, wobei die zu verschließende Naht zunächst gefaltet wird und die Kontaktflächen anschließend mittels Schweißwerkzeugen verschweißt werden,
**dadurch gekennzeichnet, dass** die hintereinander angeordneten, gefüllten Packungen einem kontinuierlich umlaufenden Transportrad zugeführt werden, dort mittels mit umlaufenden Faltwerkzeugen derart gefaltet werden, dass sich eine Stegnaht bildet und dass die Stegnähte mittels wenigstens einem mitgeführten Schweißwerkzeug ultraschallverschweißt werden.

11. Verfahren nach Anspruch 10,
**dadurch gekennzeichnet, dass** jedes Schweißwerkzeug solange mitgeführt wird, bis eine ordnungsgemäße Schweißnaht hergestellt worden ist und anschließend zu einer weiteren Packung verfährt.

12. Verfahren nach Anspruch 10 oder 11,
**dadurch gekennzeichnet, dass** die Packungen zur Bildung der Stegnaht angehoben werden, so dass die Stegnahtlappen vor und während des Schweißvorganges stets in der gleichen Höhe bleiben.

13. Verfahren nach einem der Ansprüche 10 bis 12,
**dadurch gekennzeichnet, dass** nach dem Schweißvorgang die Stegnaht und die Packungsohren umgelegt werden.

14. Verfahren nach einem der Ansprüche 10 bis 13,
**dadurch gekennzeichnet, dass** die Packungen auf dem Kopf stehend transportiert und verschlossen werden.

## Claims

1. A device for sealing filled cardboard/plastic composite packages by using ultrasonics, having at least one folding tool and at least one welding tool and a conveyor device for conveying the packages,
**characterized by**
a conveyor wheel (1) which holds a plurality of packages (P) arranged in succession, a number of folding tools (4) revolving with the conveyor belt (1), the number corresponding to the number of receptacle places, and at least one welding tool (5) that is mounted so it can rotate and can be moved coaxially in relation to the conveyor wheel (1).

2. The device according to claim 1,
**characterized in that**
the receptacle places for the packages (P) are arranged concentrically on the conveyor wheel (1).

3. The device according to claim 1 or 2,
**characterized in that**
the folding tools (4) are arranged in a stationary mount on the conveyor wheel (1).

4. The device according to claim 1 or 2,
**characterized in that**
the folding tools are arranged so they are movable on the conveyor wheel.

5. The device according to claim 1 or 2,
**characterized in that**
the folding tools are arranged on conveyor containers to accommodate the packages.

6. The device according to claims 1 through 5,
**characterized in that**
multiple welding tools (5) are arranged pivotably and distributed uniformly over the circumference.

7. The device according to any one of claims 1 through 6,
**characterized in that**
means (7, 8) for raising the filled packages (P) during conveyance on the conveyor wheel (1) are provided so that the fillet seam laps are always arranged at the same height before and during the welding process.

8. The device according to any one of claims 1 through 7,
**characterized in that**
additional folding tools are provided for folding over the sealed fillet seam and the package flaps.

9. The device according to claim 8,
**characterized in that**
the additional folding tools are designed in combination with the revolving folding tools.

10. A method for sealing filled cardboard/plastic composite packages by using ultrasonics, whereby the seam to be sealed is first folded and the contact faces are then welded by welding tools,
**characterized in that**
the filled packages arranged in succession one after the other are supplied to a continuously revolving conveyor wheel where they are folded by means of revolving folding tools such that a fillet seam is formed and the fillet seams are ultrasonically welded by at least one entrained welding tool.

11. The method according to claim 10,
**characterized in that**
each welding tool is entrained until a proper weld has been produced and then it is advanced to another package.

12. The method according to claim 10 or 11,
**characterized in that**
all the packages are raised for forming the fillet seam so that the fillet seam laps always remain at the same height before and during the welding process.

13. The method according to any one of claims 10 through 12,
**characterized in that**
the fillet seam and the package flaps are folded over after the welding process.

14. The method according to any one of claims 10 through 13,
**characterized in that**
the packages are conveyed and sealed upside down.

## Revendications

1. Dispositif de fermeture au moyen d'ultrasons d'emballages remplis en matériau composite de carton et de matière synthétique, qui présente au moins un outil de pliage et au moins un outil de soudage ainsi qu'un dispositif de transport qui transporte les emballages,
**caractérisé par** une roue de transport (1) qui reprend plusieurs emballages (P) disposés les uns derrière les autres, par un nombre d'outils (4) de pliage qui tournent avec la roue de transport (1) qui correspond au nombre d'emplacements de réception et par au moins un outil de soudage (5) disposé à rotation et qui peut être déplacé coaxialement par rapport à la roue de transport (1).

2. Dispositif selon la revendication 1, **caractérisé en ce que** les emplacements de reprise des emballages (P) sur la roue de transport (1) sont disposés concentriquement.

3. Dispositif selon les revendications 1 ou 2, **caractérisé en ce que** les outils de pliage (4) sont placés en position stationnaire sur la roue de transport (1).

4. Dispositif selon les revendications 1 ou 2, **caractérisé en ce que** les outils de pliage sont disposés de manière à pouvoir se déplacer sur la roue de transport.

5. Dispositif selon les revendications 1 ou 2, **caractérisé en ce que** les outils de pliage sont disposés sur des récipients de transport destinés à reprendre les emballages.

6. Dispositif selon les revendications 1 à 5, **caractérisé en ce qu'**il présente plusieurs outils de soudage (5) répartis régulièrement à la périphérie et disposés de manière à pouvoir pivoter.

7. Dispositif selon l'une des revendications 1 à 6, **caractérisé en ce qu'**il présente des moyens (7, 8) de relèvement des emballages (P) remplis pendant leur transport sur la roue de transport (1) de telle sorte que les pattes de soudage soient toujours disposées à même hauteur avant et pendant l'opération de soudage.

8. Dispositif selon l'une des revendications 1 à 7, **caractérisé en ce que** d'autres outils de pliage sont prévus pour rabattre le cordon de soudage fermé ainsi que les oeillets des emballages.

9. Dispositif selon la revendication 8, **caractérisé en ce que** les autres outils de pliage sont combinés avec les outils rotatifs de pliage.

10. Procédé de fermeture par ultrasons d'emballages remplis en matériau composite de carton et de matière synthétique, le cordon à fermer étant d'abord replié et les surfaces de contact étant ensuite soudées au moyen d'outils de soudage,
**caractérisé en ce que** les emballages remplis disposés les uns derrière les autres sont amenés à une roue de transport qui tourne en continu, où ils sont pliés à l'aide d'outils rotatifs de pliage de manière à former un cordon de soudage et **en ce que** les cordons de soudage sont soudés par ultrasons au moyen d'un outil de soudage entraîné conjointement.

11. Procédé selon la revendication 10, **caractérisé en ce que** chaque outil de soudage est entraîné conjointement jusqu'à ce qu'un cordon de soudage correct ait été formé et est ensuite déplacé vers un autre emballage.

12. Procédé selon les revendications 10 ou 11, **caractérisé en ce que** les emballages sont relevés pour former le cordon de soudage de telle sorte que les pattes de cordon de soudage restent toujours à la même hauteur avant et pendant l'opération de soudage.

13. Procédé selon l'une des revendications 10 à 12, **caractérisé en ce que** le cordon de soudage et les oeillets des emballages sont rabattus après l'opération de soudage.

14. Procédé selon l'une des revendications 10 à 13, **caractérisé en ce que** les emballages sont transportés et fermés en étant posés sur leur tête.
